# FASCICULE DE BREVET EUROPEEN

(11) **EP 3 599 409 B1**
(45) Date de publication et mention de la délivrance du brevet: **26.05.2021**
(21) Numéro de dépôt: 19187797.6
(22) Date de dépôt: 23.07.2019
(51) Int. Cl.: F16L 37/34

(54) **RACCORD RAPIDE POUR LA JONCTION AMOVIBLE DE DEUX CANALISATIONS PARCOURUES PAR UN FLUIDE SOUS PRESSION**
SCHNELLKUPPLUNG FÜR DIE LÖSBARE VERBINDUNG VON ZWEI LEITUNGEN, DURCH DIE EINE FLÜSSIGKEIT UNTER DRUCK FLIESST
QUICK COUPLING FOR REMOVABLE CONNECTION OF TWO PIPES CONTAINING PRESSURISED FLUID

(30) Priorité: 24.07.2018 FR 1856849
(43) Date de publication de la demande: 29.01.2020
(73) Titulaire: Staubli Faverges, 74210 Faverges-Seythenex (FR)
(72) Inventeur: TIBERGHIEN, Alain-Christophe, 74320 Sevrier (FR); DURIEUX, Christophe, 73200 Gilly sur Isere (FR); MARQUES-BARROCA, Serafim, 73460 Frontenex (FR); PASTORE, Olivier, 73400 Ugine (FR); POLY, Olivier, 74560 Chavanod (FR); BAHNO, Igor, 73400 Ugine (FR); MAYER, Romain, 73400 Hery sur Ugine (FR)
(74) Mandataire: Lavoix

(56) Documents cités:
- EP-A1- 2 048 425
- EP-A1- 3 255 332

## Description

La présente invention concerne un raccord rapide pour la jonction amovible de deux canalisations parcourues par un fluide sous pression.

Dans le domaine de la connexion de conduites de fluide sous pression, il est connu d'utiliser un raccord comprenant deux éléments de raccord complémentaires (mâle et femelle). Les deux éléments de raccord comportent des organes mobiles qui se repoussent mutuellement, par simple rapprochement des deux éléments de raccord, pour ouvrir une veine fluide reliant les conduits de passage des deux éléments de raccord. En pratique, on retrouve un élément d'étanchéité, du type joint torique, qui assure l'étanchéité entre les conduits respectifs des deux éléments de raccord tant qu'il est en contact avec une surface, souvent cylindrique. La veine fluide s'ouvre dès la perte de ce contact. Aussi, l'élément d'étanchéité est directement exposé au fluide circulant dans la veine en position accouplée du raccord, et ce dès l'équilibrage (en pression) des conduites à connecter. FR 2 861 159 A1 divulgue un exemple de raccord de ce type.

Un problème inhérent à la jonction de canalisations sous pression est qu'il y a souvent un différentiel de pression important entre les deux canalisations à connecter : généralement, l'une des deux conduites est déjà sous pression lors du raccordement (pression de service). Ainsi, le joint d'étanchéité subit des contraintes importantes lorsque la communication fluidique entre les deux éléments de raccord est établie, notamment car l'équilibrage en pression intervient brusquement.

Dans FR 2 861 159 A1 typiquement, le joint d'étanchéité est soumis à un pic de pression lorsque le poussoir de l'élément femelle de raccord dépasse l'embouchure de l'élément mâle complémentaire au niveau d'un cône, et repousse la soupape mâle pour connecter les deux canalisations. Cette phase a lieu dans une configuration dite d'équilibrage qu'on identifie entre le début d'accouplement et la phase de connexion totale des conduites. Il s'agit de la dernière barrière d'étanchéité entre les deux conduites à connecter.

A l'équilibrage, la pression s'exerçant sur la périphérie du joint augmente brutalement, de telle sorte qu'une partie ou la totalité du joint est étirée et entrainée par la pression contre l'épaulement du logement. Dans le cas le plus favorable, le joint se retrouve en travers à l'intérieur de son logement, alors que dans le cas le plus défavorable, le joint sort complètement de son logement. Ce défaut de positionnement entraine, lors de la déconnexion mécanique des éléments de raccord, des fuites au niveau de la face avant de l'élément de raccord sous pression, lesquelles proviennent par exemple d'un mauvais retour en position des éléments d'étanchéité en face avant. Clairement, ce problème d'étanchéité peut s'avérer dommageable, notamment pour des applications de refroidissement d'électronique fragile ou en cas de déversement d'huile sur des appareils inflammables.

L'exposition des joints dans la veine fluide peut donc entraîner des problèmes de fermeture et d'étanchéité à la déconnexion du raccord. A long terme, l'expulsion partielle du joint hors de son logement peut également poser des problèmes de dégradation accélérée.

Pour pallier ce problème, il est connu, par exemple de EP 2 669 560 A1, de réaliser une fuite au niveau d'une face d'étanchéité pour décharger la conduite sous pression par l'intermédiaire d'une section d'étanchéité supplémentaire, en plus de celle assurant l'étanchéité du raccord à l'état accouplé. Cette solution nécessite la création d'une zone d'étanchéité et d'un joint supplémentaires qui ajoutent des contraintes de conception liées à l'encombrement et des contraintes d'industrialisation. La fuite créée est dispersée à l'extérieur du raccord, ce qui est problématique dans certaines applications. En outre, le problème d'entrainement du joint par le débit de fluide à la connexion est éventuellement réduit, mais non résolu par l'abaissement de pression.

Il est aussi connu de EP 0 477 949 A1 de prévoir une protection de joint adaptée au passage de fluide dans le sens radial, mais dont les frottements dynamiques à chaque connexion sur les surfaces des pièces mécaniques peuvent être néfastes dans la durée de vie du joint.

Il est également connu de EP 3 227 595 A1 de protéger un joint par la création d'un passage dans un piston creux de la veine fluide. Toutefois, cette solution ne s'applique qu'à une configuration de clapetterie spécifique.

EP 2 048 425 A1 décrit un raccord comprenant un élément mâle, avec un corps, un clapet pourvu d'un ressort de compression, et comprenant un élément femelle, avec un corps incluant un poussoir fixe, ainsi qu'un clapet pourvu d'un ressort de compression. L'élément femelle comprend trois organes de verrouillage repoussés par un autre ressort, via une rondelle, au travers de logements du corps de l'élément femelle et qui, dans une configuration verrouillée du raccord, sont reçus dans une gorge de l'élément mâle.

EP 3 255 332 A1 décrit un raccord comprenant un élément femelle, qui inclut un poussoir, dont un nez porte une bague de décharge permettant un écoulement entre la bague de décharge et le nez, dans un passage de décharge.

L'objet de l'invention est de remédier aux inconvénients précités en proposant un nouveau raccord qui palie la situation d'augmentation brutale de pression lors de la connexion des deux éléments de raccord, pour éviter le déboitement temporaire ou permanent du joint d'étanchéité lors de l'équilibrage en pression.

A cet effet l'invention concerne un raccord rapide pour la jonction amovible de deux canalisations parcourues par un fluide sous pression, composé d'un élément mâle et d'un élément femelle apte à recevoir l'élément mâle par emmanchement selon un axe longitudinal entre une configuration désaccouplée et une configuration accouplée du raccord.

L'élément mâle comprend un corps mâle cylindrique, définissant une cavité longitudinale et une embouchure distale de diamètre inférieur à celui de la cavité, une soupape mobile axialement à l'intérieur de la cavité, entre une position avancée dans laquelle elle obture l'embouchure et une position reculée dans laquelle elle n'obture pas l'embouchure, et un premier joint d'étanchéité qui est porté par le corps mâle ou la soupape, et qui prend appui respectivement sur la soupape ou sur une paroi cylindrique interne du corps mâle.

L'élément femelle comprend un corps femelle cylindrique, définissant une cavité longitudinale et une embouchure distale de diamètre inférieur ou égal à celui de la cavité, un poussoir, et un tiroir, qui est agencé radialement entre le corps femelle et le poussoir et qui est mobile axialement à l'intérieur de la cavité longitudinale entre une position avancée, dans laquelle il obture l'embouchure et une position reculée dans laquelle il n'obture pas l'embouchure, et un second joint d'étanchéité qui est porté par le tiroir ou le poussoir, et qui prend appui respectivement sur une paroi cylindrique externe du poussoir ou sur le tiroir.

Conformément à l'invention, le corps mâle ou le poussoir délimite un canal de passage de fluide reliant l'intérieur de la cavité à l'embouchure distale, respectivement de l'élément mâle ou de l'élément femelle. Le canal de passage, débouchant à l'intérieur de la cavité de l'élément mâle ou de l'élément femelle, s'inscrit à l'intérieur d'un cercle, dont le diamètre est respectivement plus grand ou plus petit que celui des premier et second joints d'étanchéité. Aussi, le canal s'étend entre deux plans perpendiculaires à l'axe longitudinal, respectivement entre un plan proximal et plan distal, qui sont décalés l'un par rapport à l'autre le long de l'axe longitudinal. Aussi, le canal est une rainure le long de la paroi cylindrique externe du poussoir ou le long de la paroi cylindrique interne du corps mâle.

Ainsi, l'invention consiste à prévoir un aménagement spécifique pour la surface en contact radial avec le joint exposé à la pression du fluide lors de l'équilibrage. Le ou les canaux de passage permettent de faire chuter la pression, sans que le joint ne soit brutalement exposé à la pression de la veine fluide et sans engendrer de fuites à l'extérieur du raccord. Aussi, l'effet de l'invention est de créer une fuite locale sur un segment de joint interne ou externe avant l'ouverture complète du circuit.

Selon des aspects avantageux, mais non obligatoires de l'invention, le raccord peut comporter une ou plusieurs des caractéristiques suivantes :
- Le plan proximal et le plan distal sont définis respectivement au niveau de la cavité et de l'embouchure distale de l'élément mâle ou femelle.
- Dans une configuration d'équilibrage du raccord, définie par emmanchement entre la configuration accouplée et la configuration désaccouplée, l'un des joints parmi le premier joint d'étanchéité et le second joint d'étanchéité est disposé entre le plan proximal et le plan distal, alors que l'autre joint est à l'intérieur de la cavité de l'élément mâle ou femelle correspondant, de telle façon qu'une liaison fluidique est formée entre les cavités des éléments mâle et femelle.
- La liaison fluidique entre les cavités des éléments mâle et femelle est réalisée de façon étanche par rapport à l'extérieur.
- Dans une position d'équilibrage du raccord, définie entre la configuration accouplée et désaccouplée, la paroi cylindrique externe du poussoir ou la paroi cylindrique interne du corps mâle retient respectivement, de façon partielle, le premier joint d'étanchéité ou le second joint d'étanchéité dans le sens radial.
- Le canal s'étend au moins en partie le long d'une partie tronconique du corps mâle ou du poussoir.
- Plusieurs rainures sont formées le long de la paroi cylindrique externe du poussoir ou de la paroi cylindrique interne du corps mâle et sont régulièrement réparties sur la circonférence de la paroi.
- Les deux plans distal et proximal sont décalés l'un de l'autre d'une distance correspondant à au moins une épaisseur de tore du premier ou du second joint d'étanchéité.
- Les deux plans proximal et distal sont décalés l'un de l'autre d'une distance correspondant à une, deux, trois ou quatre épaisseurs de tore.
- Le poussoir est creux et comprend une ouverture radiale à l'arrière du canal.
- Le poussoir comprend, à l'avant, une tête de poussoir apte à maintenir un contact étanche avec la soupape en position désaccouplée du raccord et, à l'arrière, une partie tubulaire dont le diamètre est plus petit que celui de la tête.
- Lorsque les éléments mâle et femelle sont en configuration désaccouplée, le premier joint d'étanchéité ou le second joint d'étanchéité est respectivement en contact avec la paroi cylindrique interne du corps mâle ou la paroi cylindrique externe du poussoir, à l'avant du plan distal.
- Les faces avant du corps mâle et de la soupape, ainsi que les faces avant du poussoir et du tiroir sont coplanaires lorsque les éléments mâle et femelle sont en configuration désaccouplée.

L'invention et d'autres avantages de celle-ci apparaitront plus clairement à la lumière de la description qui va suivre de quatre modes de réalisation d'un raccord conforme à son principe, donnée uniquement à titre d'exemple et faite en référence aux dessins annexés dans lesquels :
- La figure 1 est une coupe longitudinale d'un premier élément de raccord, respectivement d'un élément mâle, alors en configuration désaccouplée ;
- La figure 2 est une coupe longitudinale du second élément de raccord, respectivement l'élément femelle, alors en configuration désaccouplée ;
- La figure 3 est une coupe partielle, dans le sens de la longueur, dans laquelle les deux éléments de raccord sont représentés dans une première configuration intermédiaire entre la configuration désaccouplée et la configuration accouplée ;
- La figure 4 est une coupe comparable à celle de la figure 3, dans laquelle les deux éléments de raccord sont représentés dans une seconde configuration ultérieure ;
- La figure 5 est une coupe selon la ligne V-V à la figure 4 ;
- La figure 6 est une coupe du raccord représenté en configuration accouplée ;
- La figure 7 est une coupe partielle d'un élément de raccord, du type mâle, selon une deuxième mode de réalisation de l'invention ;
- La figure 8 est une coupe partielle d'un raccord conforme à un troisième mode de réalisation, ne correspondant pas à l'invention, et dans laquelle les deux éléments de raccord sont représentés en configuration accouplée ;
- La figure 9 est une coupe longitudinale d'un raccord conforme à un quatrième mode de réalisation de l'invention, et dans laquelle les deux éléments de raccord sont représentés dans une première configuration intermédiaire entre la configuration désaccouplée et la configuration accouplée ;
- La figure 10 est une coupe comparable à celle de la figure 9, dans laquelle les deux éléments de raccord sont représentés dans une seconde configuration ultérieure ;
- La figure 11 est une coupe dans le plan de la ligne XI-XI à la figure 9 ; et
- La figure 12 est une coupe comparable à celle de la figure 11, dans laquelle le raccord est en configuration accouplée, le plan de coupe de la figure 12 étant légèrement décalé axialement par rapport à celui de la figure 11.

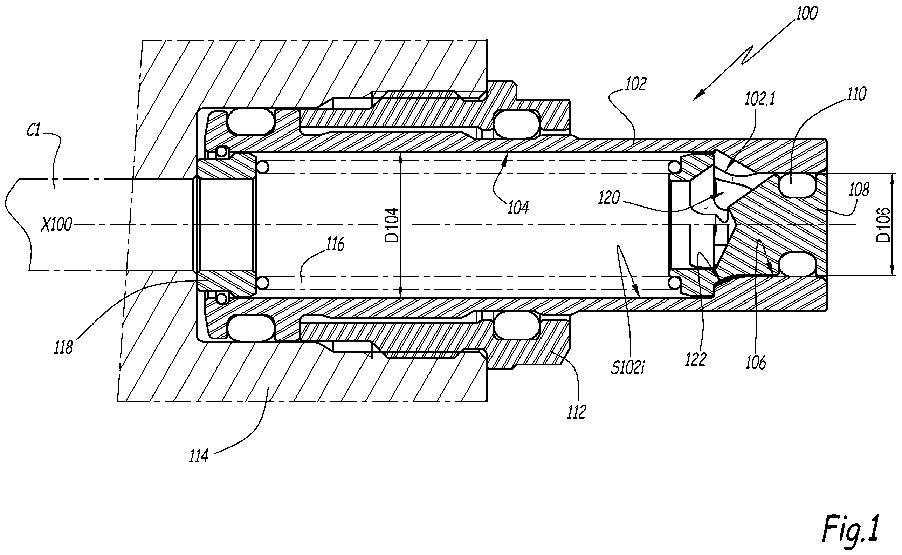

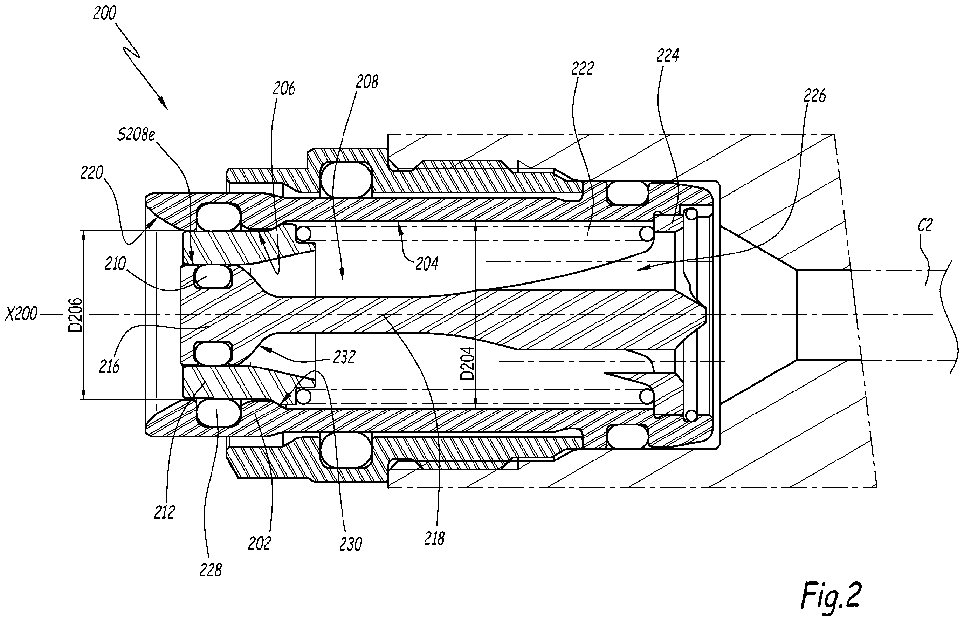

Sur les figures 1 à 6 est représenté un premier mode de réalisation d'un raccord rapide R pour la jonction amovible de deux canalisations C1 et C2 parcourues par un fluide sous pression. Les canalisations C1 et C2 sont représentées schématiquement en traits fins sur les figures 1 et 2.

Avantageusement, le raccord R peut être utilisé quel que soit le sens de circulation du fluide à l'intérieur des conduites C1 et C2.

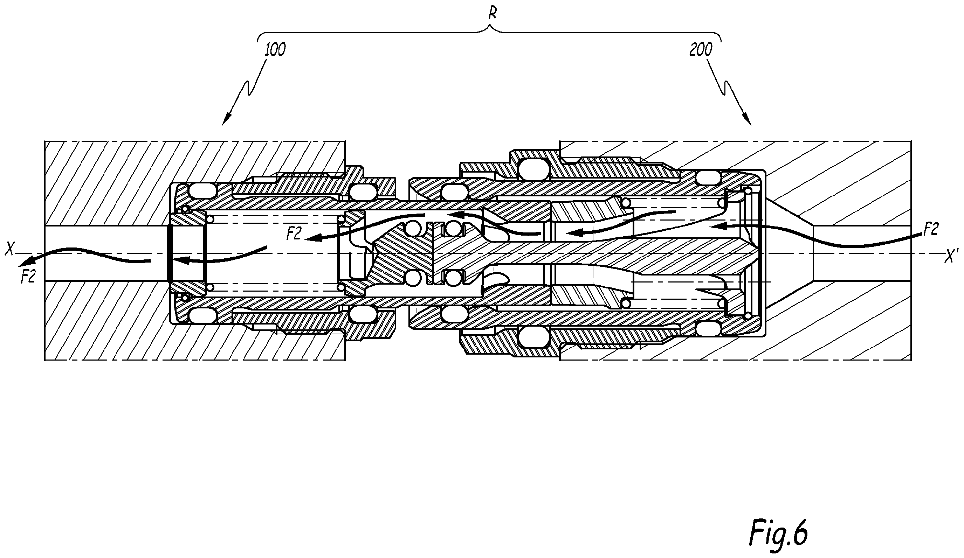

Comme visible à la figure 6, le raccord R est composé d'un élément mâle 100 et d'un élément femelle 200 apte à recevoir l'élément mâle 100 par emmanchement selon un axe longitudinal X-X'.

L'invention s'applique particulièrement à la configuration où l'une des canalisations parmi les canalisations C1 et C2 est sous pression, typiquement à une pression dite de service comprise entre 3 et 7 bars, tandis que l'autre canalisation n'est pas sous pression. Par exemple, un des éléments de raccord 100 ou 200 est fixé de façon étanche à un appareillage de source de liquide de refroidissement (non représentée) et de débit en amont, et l'autre élément, respectivement 200 ou 100, à l'alimentation d'un appareil de conduction du liquide de refroidissement vers des circuits électroniques (non représentés) en aval.

Dans un repère associé à un élément de raccord 100 ou 200, on définit les directions « avant » et « distale » comme des directions parallèles à l'axe longitudinal X-X' et tournées vers l'élément de raccord complémentaire, respectivement 200 ou 100. A l'inverse, on définit les directions « arrière » et « proximale » comme des directions parallèles à l'axe longitudinal X-X' et tournées du côté opposé à l'élément de raccord complémentaire 200 ou 100

Dans l'exemple, la partie arrière de l'élément mâle 100 est connectée à la canalisation C1, alors que la partie arrière de l'élément femelle 200 est connectée à la canalisation C2.

Comme visible à la figure 1, l'élément mâle 100 prend globalement la forme d'un cylindre, centré sur un axe longitudinal X100.

L'élément mâle 100 comprend un corps mâle cylindrique 102, centré sur l'axe X100 et définissant une cavité longitudinale 104 et une embouchure distale 106 dont le diamètre D106 est inférieur au diamètre D104 de la cavité 104.

Un écrou 112 est disposé coaxialement autour du corps mâle 102. L'écrou 112 est vissé à l'intérieur d'un taraudage délimité par une plaque de raccordement 114, qualifiée de « plaque aval ».

L'élément mâle 100 comprend aussi une soupape 108 mobile axialement, c'est-à-dire parallèlement à l'axe X100, à l'intérieur de la cavité 104, entre une position avancée, représentée à la figure 1, dans laquelle elle obture l'embouchure 106 par un contact étanche avec une paroi cylindrique interne S102i du corps mâle 102, et une position reculée, représentée à la figure 6 par exemple, dans laquelle elle n'obture pas l'embouchure 106.

Un moyen de rappel 116, typiquement un ressort, rappelle la soupape 108 en position avancée. Cela signifie que le moyen de rappel 116 charge élastiquement la soupape 108 vers l'avant.

Le moyen de rappel 116 est interposé axialement entre la soupape 108 et une butée 118 disposée, à l'intérieur du corps 102, à l'extrémité arrière.

Avantageusement, le corps mâle 102 définit, sur sa surface radiale interne S102i, un siège 122 contre lequel la soupape 108 vient en butée lors du rappel en position avancée, et également en configuration désaccouplée. Ce siège 122 est formé par une surface évasée, convergeant vers l'avant. On pourrait aussi envisager, en variante, un simple épaulement.

Ainsi la surface S102i du corps mâle définit, d'arrière vers l'avant au moins par la cavité proximale 104 de diamètre D104, qui se prolonge, par une partie tronconique réduisant la section de passage au niveau du siège 122 de soupape 108, vers l'embouchure distale 106 dont le diamètre D106 est inférieur à celui de la cavité 104. La cavité 104 est globalement cylindrique et le diamètre D104 caractérise la section distale de la surface S102i à l'arrière du siège de soupape 122.

Ici, le siège de soupape 122 sépare l'embouchure cylindrique 106 de la cavité 104, laquelle présente un diamètre plus important.

L'élément mâle 100 comprend également un joint d'étanchéité 110, avantageusement porté par la soupape 108. Plus précisément, le joint 110 est monté à l'intérieur d'un logement périphérique, notamment une gorge annulaire, définie sur la surface radiale externe de la soupape 108. Ici, le joint d'étanchéité 110 est un joint torique.

Le joint d'étanchéité 110 assure la fermeture étanche de la cavité 104 de l'élément mâle 100 par un contact étanche entre la soupape 108 et le corps 102, en particulier au niveau de l'embouchure distale 106, lors de sa prise d'étanchéité sur son siège 122 et son positionnement en face avant.

Des joints d'étanchéité sont également prévus entre le corps mâle 102 et la plaque aval 114 et entre l'écrou 112 et le corps mâle 102.

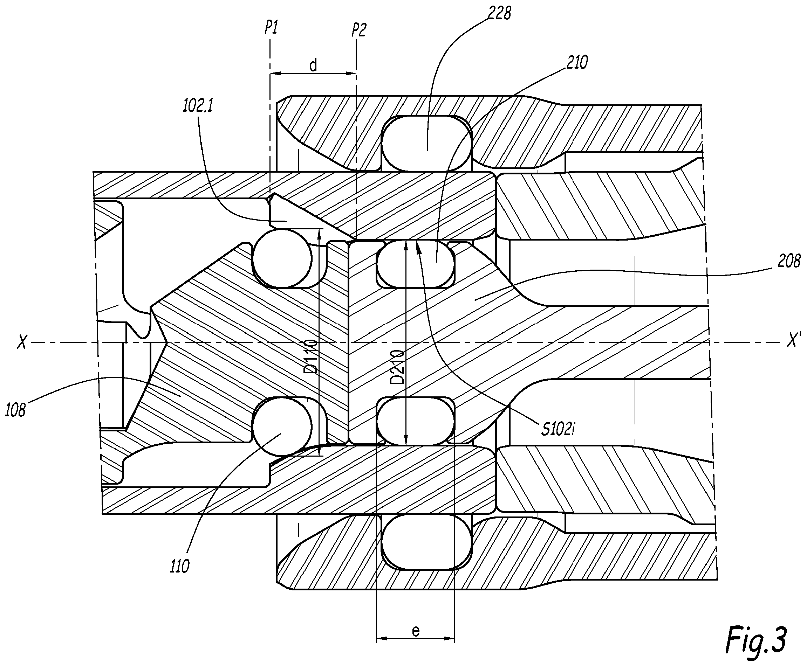

Comme visible à la figure 3, le corps mâle 102 délimite un canal 102.1 reliant l'intérieur de la cavité 104 de l'élément mâle 100 à la paroi cylindrique de l'embouchure 106.

Le canal est un conduit, ou passage local, aménagé dans le corps mâle s'étendant longitudinalement entre le plan P1 et le plan P2, qui ne s'étend pas latéralement sur toute la circonférence de la surface interne du corps mâle. C'est-à-dire que le canal de passage est défini sur un secteur angulaire uniquement de la paroi cylindrique S102i du corps mâle 102. Par l'expression « le canal s'étend entre deux plans P1 et P2 », on entend avantageusement que le canal relie le plan P1 au plan P2, comme montré par exemple sur la figure 3.

Avantageusement, le canal 102.1 est tel qu'une rainure formée le long de la paroi cylindrique interne S102i du corps mâle 102. De préférence, plusieurs canaux, tels que des rainures, sont formées le long de la paroi cylindrique interne S102i du corps mâle 102 et sont régulièrement réparties sur la circonférence de la paroi S102i sur différents secteurs angulaires, pour réaliser un passage de fluide.

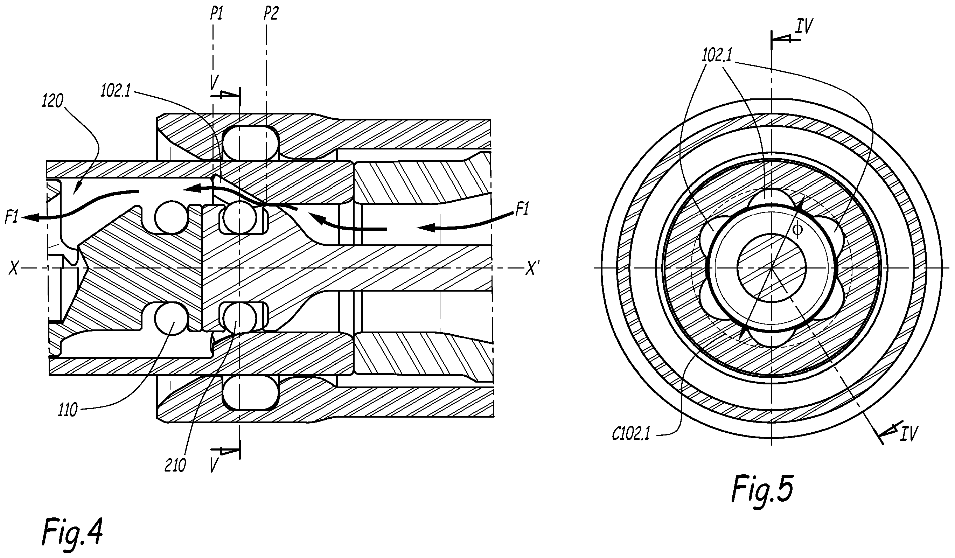

Comme visible à la figure 5, les rainures 102.1, s'inscrivent à l'intérieur d'un cercle C102.1 (cercle inscrit centré sur l'axe X100), dont le diamètre ø est plus grand que le diamètre D110 du joint d'étanchéité 110. Par l'expression « s'inscrit à l'intérieur d'un cercle », on entend ici que dans au moins une section de coupe transversale, on peut tracer un cercle (imaginaire), qualifié de cercle inscrit, qui est centré sur l'axe longitudinal X100 de l'élément de raccord, typiquement l'élément mâle 100 et qui enveloppe la section de passage de chaque rainure 102.1. Dans l'illustration de la figure 5 par exemple, on retrouve six rainures 102.1 autour desquels on peut tracer le cercle C102.1. Aussi, les surfaces et les lignes des canaux, c'est-à-dire des rainures, définies dans le corps de raccord, sont délimitées par rapport à un cercle et définies à l'intérieur de ce cercle. A la figure 5, les fonds de rainures sont par exemple à équidistance de l'axe central X100 de l'élément de raccord, si bien qu'on peut définir un cercle inscrit C102.1 qui intersecte le fond de toutes les rainures.

En alternative (non représentée), on peut définir un cercle centré sur l'axe qui intersecte au moins un fond de rainure de passage de fluide, typiquement le fond de la rainure la plus éloignée de l'axe, parmi des rainures, autant ou moins éloignées de l'axe. Aussi, la profondeur des rainures 102.1 n'est pas forcément identique pour toutes les rainures.

Les canaux de passage de fluide, c'est-à-dire les rainures 102.1, s'étendent entre deux plans perpendiculaires à l'axe longitudinal X-X', respectivement entre un plan proximal P1 et plan distal P2, qui sont décalés l'un par rapport à l'autre le long de l'axe longitudinal X-X'.

Avantageusement, chaque canal 102.1, et notamment chaque rainure, s'étend longitudinalement dans un plan radial, c'est-à-dire un plan passant par l'axe longitudinal X-X'. Toutefois, en variante non représentée, le canal de passage de fluide 102.1, et notamment chaque rainure, pourrait s'étendre dans un plan oblique audit plan radial.

De préférence, le plan proximal P1 et le plan distal P2 sont définis respectivement au niveau de la cavité 104 et de l'embouchure distale 106 de l'élément mâle 100.

Selon un mode de réalisation préférentiel, les deux plans proximal et distal P1 et P2 sont décalés l'un de l'autre d'une distance d correspondant à au moins une épaisseur e de tore du joint d'étanchéité 110. De façon encore plus avantageuse, la distance d correspond à une, deux, trois ou quatre épaisseurs e de tore. L'épaisseur de tore e est mesurée parallèlement à l'axe longitudinal X100 ou X-X'.

Dans le mode de réalisation des figures, chaque canal de passage de fluide, c'est-à-dire les rainures 102.1, s'étendent au moins en partie le long d'une partie évasée, ou tronconique, du corps mâle 102. Aussi, les deux plans P1 et P2 sont de préférence définis au niveau d'une cette partie tronconique. Typiquement, cette partie évasée ou tronconique converge vers l'avant. Il s'agit en fait du siège 122 de réception de la soupape 108.

Avantageusement, lorsque les éléments mâle et femelle sont en configuration désaccouplée, le joint d'étanchéité 110 est en contact étanche avec la paroi cylindrique interne S102i du corps mâle 102, à l'avant du plan distal P2. La paroi cylindrique interne S102i, au niveau de l'embouchure 106, forme une surface qui est en contact radial avec le joint 110 pour assurer cette étanchéité. En configuration désaccouplée, le canal de passage 102.1 débouche avantageusement au niveau de l'embouchure, à l'arrière du contact radial étanche entre la paroi cylindrique S102i et le joint 110. En configuration accouplée des éléments mâle et femelle, le joint 110 perd le contact radial étanche avec la paroi cylindrique S102i de telle sorte que le joint est en contact avec, et exposé, à la veine fluide.

Comme visible à la figure 2, l'élément femelle 200 prend globalement la forme d'un cylindre, centré sur un axe longitudinal X200.

L'élément femelle 200 comprend un corps femelle cylindrique 202, centré sur l'axe X200, et définissant une cavité longitudinale 204 et une embouchure distale 206 dont le diamètre D206 est inférieur au diamètre D204 de la cavité 204.

Un poussoir 208 (ou piston) est disposé au centre du corps femelle 202. Avantageusement, le poussoir 208 comprend, à l'avant, une tête de poussoir 216 apte à maintenir un contact étanche avec un tiroir 212 de l'élément femelle 200 en position désaccouplée du raccord et, à l'arrière, une partie tubulaire 218 (ou tige centrale) dont le diamètre est plus petit que celui de la tête 216. Typiquement, le poussoir 208 délimite une section tronconique pleine 232 qui prolonge la tête de poussoir 216 vers l'arrière en une tige centrale 218 de plus petit diamètre.

Le tiroir 212 est agencé radialement entre le corps femelle 202 et le poussoir 208. Ce tiroir 212 est mobile axialement à l'intérieur de la cavité longitudinale 204 entre une position avancée, représentée à la figure 2, dans laquelle il obture l'embouchure 206 par un contact étanche avec une paroi cylindrique externe S208e du poussoir 208, et une position reculée, représentée à la figure 6 par exemple, dans laquelle il n'obture pas l'embouchure 206. En position avancée, le tiroir 212 s'étend avantageusement radialement autour de la tête 216 du poussoir 208 pour obturer l'embouchure 206.

Ainsi la surface externe S208e du poussoir est définie, d'arrière vers l'avant, au moins par la tige centrale 218, qui se prolonge par une partie tronconique réduisant la section de passage dans le plan du siège 230 de soupape 212, vers la tête 216 dont le diamètre est supérieur à celui de la tige 218.

Un moyen de rappel 222, typiquement un ressort, rappelle le tiroir 212 en position avancée. Cela signifie que le moyen de rappel 222 charge élastiquement le tiroir 212 vers l'avant.

Avantageusement, le corps femelle 202 définit, sur sa surface radiale interne, un siège 230 contre lequel le tiroir vient en butée lors du rappel en position avancée, et également en configuration désaccouplée. Ce siège 230 est formé par une surface tronconique, convergeant vers l'avant. On pourrait aussi envisager, en variante, un simple épaulement.

Le moyen de rappel 222 est interposé axialement entre le tiroir 212 et une butée 224 disposée, à l'extrémité arrière, à l'intérieur du corps 202 entre un épaulement et un jonc du corps. De préférence, la butée 224 et le poussoir 208 sont d'un seul tenant.

Le poussoir 208 porte avantageusement un joint d'étanchéité 210. Plus précisément, le joint 210 est monté à l'intérieur d'un logement périphérique, notamment une gorge annulaire, définie sur la surface radiale externe du poussoir 208. Ici, le joint d'étanchéité 210 est un joint torique.

En particulier, le joint 210 est porté par une partie de la paroi cylindrique externe S208e du poussoir 208 délimitant radialement la tête 216.

De préférence, le corps femelle 202 comprend une extrémité avant dont la surface radiale interne 220 est tronconique et évasée vers l'avant. Cette forme en entonnoir facilite l'emmanchement de l'élément femelle 200 autour de l'élément mâle 100 durant l'accouplement, et en particulier au début, lors du rapprochement des deux éléments de raccord.

Avantageusement, les faces avant du corps mâle 102 et de la soupape 108, ainsi que les faces avant du poussoir 208 et du tiroir 212 sont coplanaires lorsque les éléments mâle et femelle sont en configuration désaccouplée. On parle d'un raccord à face plane ou à faces affleurantes. Néanmoins, il est évident que l'invention s'applique également à d'autres types de raccord.

Dans l'exemple, le poussoir 208 et la soupape 108 comportent une partie pleine avec un évasement conique ouvert en partie arrière. En d'autres termes, le poussoir 208 et la soupape 108 comprennent chacun au moins une ouverture, respectivement 226 et 120, à travers lesquelles le fluide circule en configuration accouplée du raccord. Dans les deux cas, les ouvertures 226 et 120 sont délimitées à l'intérieur d'une partie évasée, respectivement du poussoir 208 et de la soupape 108.

De préférence, un joint torique 228 est positionné à l'intérieur d'une gorge annulaire délimitée par la surface radiale interne du corps femelle 202. En position désaccouplée du raccord, lorsque le tiroir 212 prend appui sur le siège 230 du corps 202, le joint 210 est sensiblement dans le même plan que le joint 228, de sorte que les deux joints remplissent leur fonction d'étanchéité en même temps lors du désaccouplement des deux éléments de raccord 100 et 200 et que la communication fluidique entre les deux éléments de raccord est fermée en un temps.

On décrit ci-après le fonctionnement du raccord, notamment la phase d'accouplement des éléments de raccord mâle et femelle 100 et 200.

En position désaccouplée, les organes de fermeture mobiles de chacun des éléments mâle et femelle, respectivement la soupape 108 et le tiroir 212, obturent de façon étanche les cavités (ou enceintes) 104 et 204 des éléments. Précisément, concernant l'élément mâle, la barrière d'étanchéité avant la mise en communication, ou en connexion, des enceintes 104 et 204 est une section d'étanchéité courbe (circulaire ou elliptique par exemple) et fermée entre le corps 102 et la soupape 108. Concernant l'élément femelle, la barrière d'étanchéité avant la mise en communication, ou en connexion, des enceintes 104 et 204 est formée par deux sections d'étanchéité, également de forme courbe et fermée (circulaire ou elliptique par exemple), respectivement entre le tiroir 212 et le poussoir 208 et entre le tiroir 212 et le corps femelle 202. Dans l'exemple, et comme mentionné *supra,* on utilise des joints toriques.

La première phase de l'accouplement consiste à approcher les éléments 100 et 200 l'un de l'autre, et notamment à approcher les extrémités distales des deux éléments l'une vers l'autre. Dans le mode de réalisation préférentiel des figures, les éléments de raccord 100 et 200 peuvent être accouplés l'un avec l'autre quelle que soit l'indexation (ou l'orientation) angulaire relative entre les deux éléments de raccord.

Par la suite, le corps mâle 102 pénètre à l'intérieur du corps femelle 202, avec un guidage le long de la surface radiale interne 220. Les axes X100 et X200 sont alors superposés avec l'axe longitudinal X-X'. Aussi, le guidage reste assuré de la même façon que les raccords de l'état de l'art.

Par l'accouplement des deux éléments 100 et 200 selon l'axe d'emmanchement X-X', les organes constitutifs des deux éléments de raccord se repoussent mutuellement en maintenant l'étanchéité de chacune des enceintes 104 et 204. Précisément, le poussoir 208 pousse la soupape 108, tandis que le tiroir 212 est repoussé par le corps mâle 102. Le raccord se trouve alors dans la configuration de la figure 3.

La poursuite de l'accouplement amène le raccord dans une configuration d'équilibrage, représentée aux figures 4 et 5. Cette configuration d'équilibrage est définie comme une position axiale intermédiaire d'emmanchement mutuel des éléments de raccords entre la configuration accouplée et désaccouplée.

Dans la configuration d'équilibrage, la tête de poussoir 216 coopérant avec la soupape 108 a pris place dans l'embouchure 106 dans une position avancée telle que son joint de poussoir 210 est partiellement en contact avec la paroi cylindrique avant S102i et retenu, mais qu'un canal d'équilibrage 102.1 est formé entre les deux enceintes 104 et 204 des éléments de raccord au niveau du logement de réception du joint 210. Autrement dit, le joint d'étanchéité 210 est disposé entre le plan proximal P1 et le plan distal P2, alors que le joint 110 est à l'intérieur de la cavité 104 de l'élément mâle 100, de telle façon qu'une liaison fluidique est formée entre les cavités 104 et 204 des éléments mâle et femelle. Aussi, le joint d'étanchéité 210 n'est que partiellement en contact, sur sa circonférence extérieure, avec la paroi cylindrique avant S102i du corps mâle 102.

Les flèches F1 à la figure 4 montrent le cheminement du fluide à travers le raccord et à travers le canal de passage dans la position d'équilibrage.

Dans l'exemple, le canal d'équilibrage 102.1 susmentionné comprend six rainures. Néanmoins, le nombre de rainures d'équilibrage 102,1, leur forme, leur longueur et leur section peut varier pour prévoir une phase de mise en communication optimale, améliorant l'ouverture du canal de façon moins brutale/plus douce et garantissant des lignes de contact du joint « d'équilibrage » 210 suffisantes pour le retenir dans sa gorge malgré les pressions en jeu.

Aussi, le joint de soupape mâle 110 n'est plus en contact étanche avec la paroi cylindrique avant du corps de son siège d'étanchéité 122, c'est-à-dire avec la paroi de l'embouchure 106.

De manière avantageuse, la jonction de liaison fluidique entre les cavités 104 et 204 des éléments mâle et femelle est réalisée de façon étanche par rapport à l'extérieur, c'est-à-dire sans fuites à l'extérieur de l'ensemble formé par le raccord et les deux canalisations C1, C2.

De préférence, dans la configuration d'équilibrage, la paroi cylindrique interne S102i du corps mâle 102 retient (ou maintient), de façon partielle, le joint d'étanchéité 210 dans le sens radial. Le raccord établit donc la pression alors qu'au moins un segment annulaire du joint 210 est toujours en contact avec la paroi cylindrique interne S102i du corps mâle 102. En d'autres termes, le dernier joint 210, assurant l'étanchéité des cavités 104 et 204 dans une phase intermédiaire d'accouplement, est maintenu localement lors de la phase d'équilibrage.

Par rapport à ce qui précède, les termes « secteur », « segment », « segment angulaire » ou encore « segment circulaire » désignent avec la même signification un arc de cercle, une portion, un tronçon, ou une partie angulaire d'un joint ou d'une gorge (de révolution, circulaire, torique). Il s'agit donc d'une sous-partie d'un joint élastomère (ou d'une gorge), c'est-à-dire d'un échantillon de son pourtour. Typiquement, une portion désigne un tronçon annulaire défini entre deux plans radiaux séparés entre eux d'un certain angle, correspondant au secteur angulaire.

Avantageusement, le siège 122 de la cavité 104 du corps mâle 102 est incliné de façon à permettre une augmentation régulière de la section de passage entre le segment de joint 210 et la section conique 122 à l'accouplement, alors qu'un segment angulaire du joint 210 est maintenu. En variante, cette augmentation de la section de passage provient de l'inclinaison de la section tronconique 232 reliant la tête 216 du piston central (ou poussoir) 208 à la tige 218.

La poursuite du mouvement d'accouplement amène le raccord dans la position accouplée représentée à la figure 6. Dans cette position, la veine fluide est établie (Voir flèches F2). Les joints 110 et 210 sont exposés à la veine fluide. La phase critique de mise en communication ayant été réalisée avec retenue du joint 210 lors d'une phase d'équilibrage, les joints peuvent être exposés au débit de la veine fluide sans risquer d'être éjectés. Ainsi, le joint 210 ne reprend pas d'étanchéité suite à la configuration d'équilibrage, contrairement aux solutions connues avec protection de joint qui n'optimisent pas le passage du fluide et complexifient la structure du raccord. A partir de la fin de phase d'équilibrage, le joint 210 reste exposé à la veine fluide.

La vitesse d'exécution de l'accouplement peut avoir une influence sur la phase de mise en pression de la canalisation en aval. Aussi, pour des diamètres de joint supérieurs, il peut être avantageux d'augmenter la longueur du canal 102.1 pour garantir une phase de retenue/équilibrage avant l'ouverture complète.

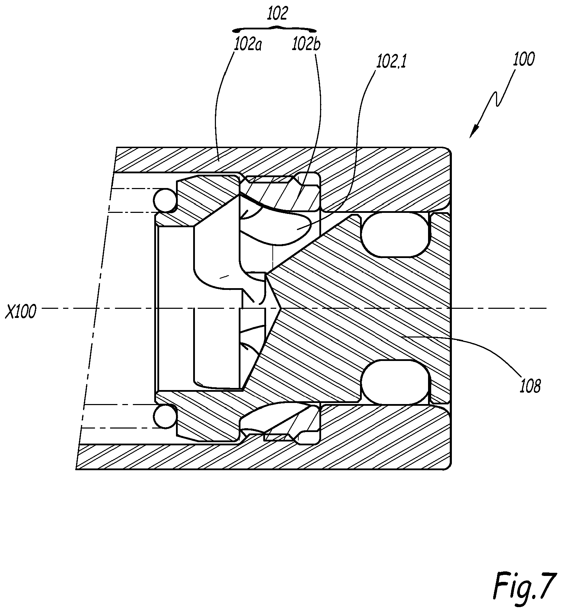

La figure 7 représente un deuxième mode de réalisation de l'invention. Dans ce mode, le corps mâle 102 est bipartite, et comprend donc deux parties 102a et 102b.

Le canal 102.1, c'est-à-dire les rainures 102.1, sont réalisées dans la partie 102b, laquelle forme un siège de soupape rapporté, qui est vissé ou arrêté axialement, par exemple au moyen d'un jonc, à la partie principale 102a du corps mâle, laquelle définit l'embouchure 106.

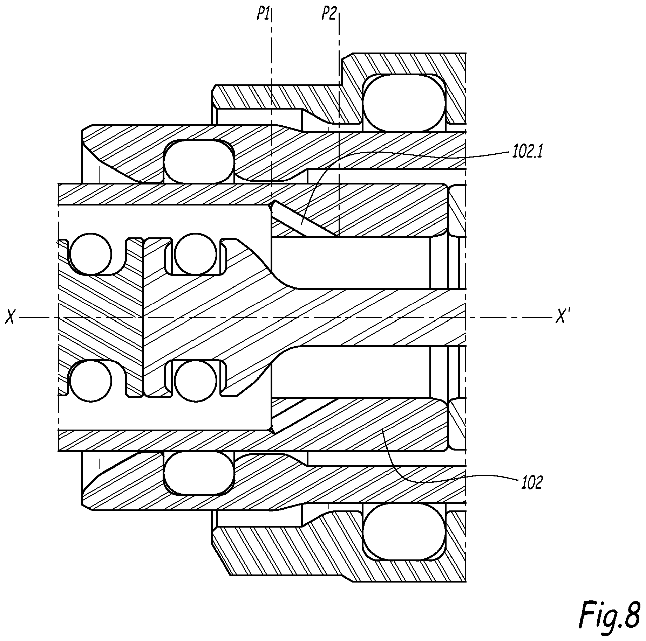

La figure 8 représente un troisième mode de réalisation, qui ne correspond pas à l'invention, mais qui pourrait faire l'objet d'une protection en tant que tel. Dans ce mode, les rainures 102.1 sont remplacées par des ouvertures obliques, que l'on référencera également 102.1, et qui sont pratiquées dans le corps mâle 102. Aussi, on comprend que l'expression « canal » couvre aussi bien une rainure ou une ouverture (trou, perçage).

Comme dans le premier mode de réalisation, les perçages obliques 102.1 s'étendent entre un plan proximal P1 et un plan distal P2, lesquels sont des plans normaux à l'axe X-X'.

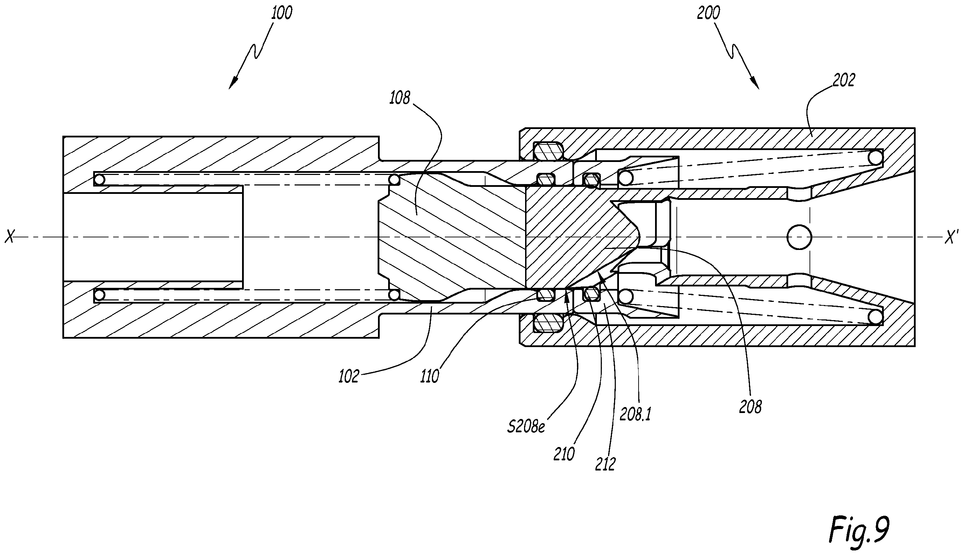

Les figures 9 à 12 représentent un quatrième mode de réalisation de l'invention. Dans ce qui suit, seules les différences par rapport aux modes de réalisation précédents sont décrites par souci de concision. Aussi, les mêmes références numériques sont utilisées.

Ce quatrième mode de réalisation est la solution miroir du premier mode de réalisation. En effet, les joints 110 et 210 sont à l'intérieur de gorges périphériques internes prévues à l'avant des éléments de raccord 100 et 200. Précisément, lesdites gorges sont délimitées sur la surface radiale interne du corps mâle 102 et sur la surface radiale interne du tiroir 212.

En particulier, en configuration désaccouplée, le joint 210 vient en contact radial avec une partie de la paroi externe S208e délimitant la tête du poussoir 208. Cette partie est avantageusement cylindrique et de diamètre constant.

Le poussoir 208 délimite un canal de passage de fluide 208.1 débouchant à l'intérieur de la cavité 204 de l'élément femelle. Le canal 208.1 débouche aussi avantageusement à l'intérieur de l'embouchure 206, au niveau de la partie cylindrique de diamètre constant de la paroi externe S208e, qui délimite la tête du poussoir 208. En particulier, le canal 208.1 débouche de la partie cylindrique de diamètre constant, de sorte que le débouchant du canal 208.1 est à l'arrière du contact radial entre le joint 210 et la partie cylindrique de diamètre constant lorsque le raccord est en configuration désaccouplée.

Le canal est un conduit, ou passage local, aménagé dans le poussoir 208 s'étendant longitudinalement entre le plan P1 et le plan P2, qui ne s'étend pas latéralement sur toute la périphérie. C'est-à-dire que le canal de passage est défini sur un secteur angulaire uniquement de la paroi externe S208e du poussoir 208. Par « le canal 208.1 s'étend entre le plan P1 et le plan P2 », on entend avantageusement que le canal 208.1 relie le plan P1 et le plan P2.

Avantageusement, le canal 208.1 est tel qu'une rainure formée le long de la paroi externe S208e du poussoir 208, notamment à l'avant du poussoir 208, au niveau de la tête de poussoir. De préférence, le canal 208.1 comprend plusieurs rainures qui sont formées le long de la paroi externe S208e du poussoir 208 et qui sont régulièrement réparties sur la circonférence de la paroi sur différents secteurs angulaires pour réaliser un passage de fluide.

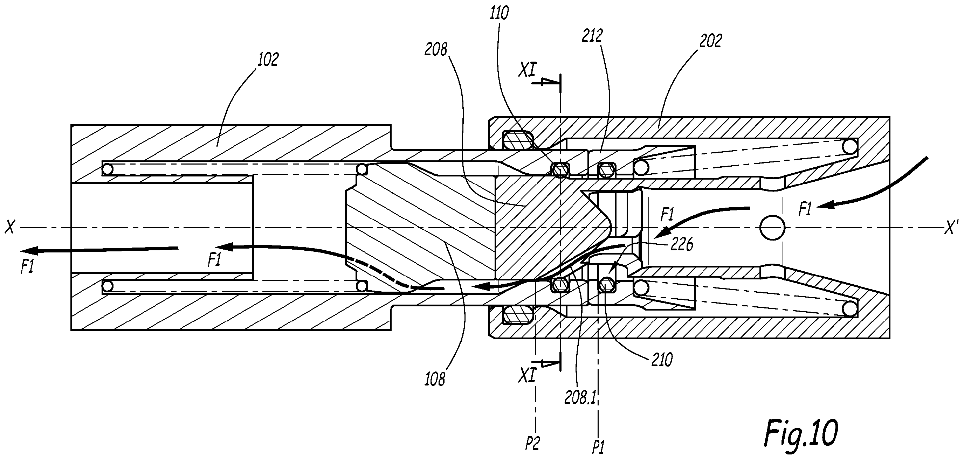

Les flèches F1 à la figure 10 montrent le cheminement du fluide à travers le raccord dans la position d'équilibrage.

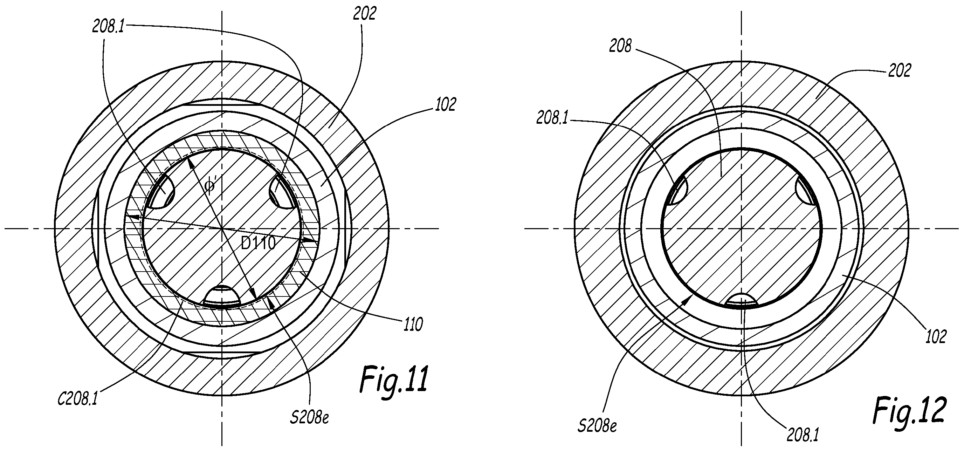

Comme visible à la figure 11, chaque canal de passage de fluide, tel que les rainures 208.1, s'inscrivent à l'intérieur d'un cercle C208.1 (cercle inscrit centré sur l'axe X200), dont le diamètre ø' est plus petit que les diamètres D110 et D210 des joints d'étanchéité 110 et 210. Par l'expression « s'inscrit à l'intérieur d'un cercle », on entend ici que, dans au moins une section de coupe transversale, on peut tracer un cercle (imaginaire), qualifié de cercle inscrit, qui est centré sur l'axe longitudinal X200 de l'élément de raccord, typiquement l'élément femelle 200 et qui enveloppe la section de passage de chaque rainure 208.1. Dans l'illustration de la figure 11 par exemple, on retrouve trois rainures 208.1 autour desquels on peut tracer le cercle C208.1. Aussi, les surfaces et les lignes du canal de passage, c'est-à-dire des rainures, définies dans le corps de raccord, sont délimitées par rapport à un cercle et définies à l'intérieur de ce cercle. A la figure 11, les bords extérieurs de rainures sont par exemple à équidistance de l'axe central X200 de l'élément de raccord, si bien qu'on peut définir un cercle inscrit C208.1 qui intersecte l'ensemble des bords des rainures.

En alternative (non représentée), on peut définir un cercle centré sur l'axe qui intersecte au moins un bord extérieur d'une rainure de passage de fluide, typiquement le bord de la rainure la plus éloignée de l'axe, parmi des rainures, autant ou moins éloignées de l'axe.

Dans ce mode de réalisation, et en particulier dans la position d'équilibrage, le joint d'étanchéité 110 est disposé entre le plan proximal P1 et le plan distal P2, alors que l'autre joint 210 est à l'intérieur de la cavité 204 de l'élément femelle, de telle façon qu'une liaison fluidique est formée entre les cavités 104 et 204 des éléments mâle et femelle. Aussi, le joint d'étanchéité 110 n'est que partiellement en contact, sur sa circonférence intérieure, avec la paroi cylindrique externe S208e du poussoir 208.

Par conséquent, dans la configuration d'équilibrage, la paroi cylindrique externe S208e du poussoir 208 retient, de façon partielle, le premier joint d'étanchéité 110 dans le sens radial.

Par ailleurs, le poussoir central 208 de l'élément femelle est creux et comprend une ouverture radiale 226 à l'arrière du canal de passage 208.1. Notamment il relie la canalisation à l'enceinte du raccord entre trois ouvertures distales, et une embouchure centrale arrière de façon à conduire la veine fluide entre les deux éléments de raccord. Cette ouverture radiale débouche au niveau d'une surface du poussoir 208, qui est de diamètre réduit par rapport au diamètre de la paroi cylindrique externe S208e à l'avant du poussoir, prévue pour maintenir le contact étanche avec le joint 210 en configuration désaccouplée des éléments mâle et femelle.

Le poussoir 208 et le corps 202 ne forment ici qu'une seule partie. En position accouplée les joints internes du corps mâle 102 et du tiroir 212, respectivement 110 et 210, bénéficient de peu de jeu avec la surface externe du poussoir 208.

En variante non représentée, applicable au quatrième mode de réalisation, le poussoir 208 est plein (et non pas creux), comme par exemple dans le premier mode de réalisation de l'invention. Aussi, le joint interne 110 du corps mâle 102 et le joint interne 210 du tiroir 212 seraient maintenus dans la veine fluide en position accouplée du raccord. En effet, selon cette variante, le fluide passe autour du poussoir 208, et non plus à l'intérieur de celui-ci, si bien que les joints 110 et 210, lesquels sont aussi agencés autour du poussoir 208, sont directement au contact de la veine fluide.

Selon la forme des rainures 102.1 ou 208.1, le joint 210 ou 110 peut avoir plusieurs segments angulaires dans la veine fluide alors que plusieurs segments angulaires sont toujours retenus par une surface de contact, en fonction du nombre de rainures d'équilibrage.

Par rainure, on entend une entaille, un canal ouvert, une crevasse, une échancrure ou tout usinage comparable étant aménagé le long de la paroi cylindrique interne du corps mâle 102 ou le long de la paroi cylindrique externe du poussoir 208, et réalisant la fonction du canal de passage décrit.

Selon une autre variante, dans la configuration d'équilibrage le premier joint ou le second joint est retenu respectivement par une surface cylindrique interne du corps mâle ou par une surface cylindrique externe du poussoir avec un jeu largement inférieur à l'épaisseur du joint, par exemple e/2.

Selon une autre variante non représentée, le raccord est du type coaxial, pour des applications de conduites de fluide entre deux éléments de raccord coaxiaux.

Selon une autre variante non représentée, les joints du raccord peuvent être des joints surmoulés, ou adhérisés par surmoulage.

Selon une autre variante non représentée, le raccord comprend un système de verrouillage des éléments mâle et femelle en configuration accouplée, tel qu'un système de verrouillage à billes.

Selon une autre variante non représentée, les diamètres D204 et D206, respectivement de la cavité 204 et de l'embouchure distale 206 du corps femelle 202, sont égaux.

## Revendications

1. Raccord rapide (R) pour la jonction amovible de deux canalisations (C1, C2) parcourues par un fluide sous pression, composé d'un élément mâle (100) et d'un élément femelle (200) apte à recevoir l'élément mâle par emmanchement selon un axe longitudinal (X-X') entre une configuration désaccouplée et une configuration accouplée du raccord,
l'élément mâle (100) comprenant :
- un corps mâle cylindrique (102), définissant une cavité longitudinale (104) et une embouchure distale (106) de diamètre (D106) inférieur à celui (D104) de la cavité,
- une soupape (108) mobile axialement à l'intérieur de la cavité, entre une position avancée dans laquelle elle obture l'embouchure et une position reculée dans laquelle elle n'obture pas l'embouchure, et
- un premier joint d'étanchéité (110) qui est porté par le corps mâle ou la soupape, et qui prend appui respectivement sur la soupape ou sur une paroi cylindrique interne (S102i) du corps mâle,
et l'élément femelle (200) comprenant :
- un corps femelle cylindrique (202), définissant une cavité longitudinale (204) et une embouchure distale (206) de diamètre (D206) inférieur ou égal à celui (D204) de la cavité,
- un poussoir (208), et
- un tiroir (212), qui est agencé radialement entre le corps femelle et le poussoir et qui est mobile axialement à l'intérieur de la cavité longitudinale entre une position avancée, dans laquelle il obture l'embouchure (206) et une position reculée dans laquelle il n'obture pas l'embouchure, et
- un second joint d'étanchéité (210) qui est porté par le tiroir ou le poussoir, et qui prend appui respectivement sur une paroi cylindrique externe (S208e) du poussoir ou sur le tiroir,
dans lequel :
- le corps mâle (102) ou le poussoir (208) délimite un canal de passage de fluide (102.1 ; 208.1) reliant l'intérieur de la cavité à l'embouchure distale, respectivement de l'élément mâle ou de l'élément femelle,
- le canal de passage (102.1 ; 208.1), débouchant à l'intérieur de la cavité de l'élément mâle ou de l'élément femelle, s'inscrit à l'intérieur d'un cercle (C102.1 ; C208.1), dont le diamètre (ø ; ø') est respectivement plus grand ou plus petit que celui (D110 ; D210) des premier et second joints d'étanchéité (110, 210),
- le canal (102.1 ; 208.1) s'étend entre deux plans perpendiculaires à l'axe longitudinal, respectivement entre un plan proximal (P1) et plan distal (P2), qui sont décalés l'un par rapport à l'autre le long de l'axe longitudinal,
**caractérisé en ce que** :
- le canal (102.1 ; 208.1) est une rainure le long de la paroi cylindrique externe (S208e) du poussoir (208) ou le long de la paroi cylindrique interne (S102i) du corps mâle (102).

2. Raccord rapide selon la revendication 1, **caractérisé en ce que** le plan proximal (P1) et le plan distal (P2) sont définis respectivement au niveau de la cavité (104 ; 204) et de l'embouchure distale (106 ; 206) de l'élément mâle ou femelle.

3. Raccord rapide selon la revendication 1 ou 2, **caractérisé en ce que** dans une configuration d'équilibrage du raccord, définie par emmanchement entre la configuration accouplée et la configuration désaccouplée, l'un des joints parmi le premier joint d'étanchéité (110) et le second joint d'étanchéité (210) est disposé entre le plan proximal (P1) et le plan distal (P2), alors que l'autre joint est à l'intérieur de la cavité (104; 204) de l'élément mâle ou femelle correspondant, de telle façon qu'une liaison fluidique est formée entre les cavités (104 ; 204) des éléments mâle et femelle.

4. Raccord rapide selon la revendication 3, **caractérisé en ce que** la liaison fluidique entre les cavités (104 ; 204) des éléments mâle et femelle est réalisée de façon étanche par rapport à l'extérieur.

5. Raccord rapide selon l'une des revendications précédentes, **caractérisé en ce que** dans une position d'équilibrage du raccord, définie entre la configuration accouplée et désaccouplée, la paroi cylindrique externe (S208e) du poussoir (208) ou la paroi cylindrique interne (S102i) du corps mâle (102) retient respectivement, de façon partielle, le premier joint d'étanchéité (110) ou le second joint d'étanchéité (210) dans le sens radial.

6. Raccord rapide selon l'une des revendications précédentes, **caractérisé en ce que** le canal (102.1 ; 208.1) s'étend au moins en partie le long d'une partie tronconique du corps mâle ou du poussoir.

7. Raccord rapide selon l'une des revendications précédentes, **caractérisé en ce que** plusieurs rainures (102.1 ; 208.1)sont formées le long de la paroi cylindrique externe (S208e) du poussoir (208) ou de la paroi cylindrique interne (S102i) du corps mâle (102) et sont régulièrement réparties sur la circonférence de la paroi.

8. Raccord rapide selon l'une des revendications précédentes, **caractérisé en ce que** les deux plans distal et proximal sont décalés l'un de l'autre d'une distance correspondant à au moins une épaisseur de tore du premier (110) ou du second joint d'étanchéité (210).

9. Raccord rapide selon la revendication précédente, **caractérisé en ce que** les deux plans proximal (P1) et distal (P2) sont décalés l'un de l'autre d'une distance (d) correspondant à une, deux, trois ou quatre épaisseurs de tore.

10. Raccord rapide selon l'une des revendications précédentes, **caractérisé en ce que** le poussoir (208) est creux et comprend une ouverture radiale (226) à l'arrière du canal (208.1).

11. Raccord rapide selon l'une des revendications précédentes, **caractérisé en ce que** le poussoir (208) comprend, à l'avant, une tête de poussoir (216) apte à maintenir un contact étanche avec la soupape (108) en position désaccouplée du raccord et, à l'arrière, une partie tubulaire (218) dont le diamètre est plus petit que celui de la tête (216).

12. Raccord rapide selon l'une des revendications précédentes, **caractérisé en ce que** lorsque les éléments mâle et femelle sont en configuration désaccouplée, le premier joint d'étanchéité (110) ou le second joint d'étanchéité (210) est respectivement en contact avec la paroi cylindrique interne (S102i) du corps mâle (102) ou la paroi cylindrique externe (S208e) du poussoir (208), à l'avant du plan distal (P2).

13. Raccord rapide selon l'une des revendications précédentes, **caractérisé en ce que** les faces avant du corps mâle (102) et de la soupape (108), ainsi que les faces avant du poussoir (208) et du tiroir (212) sont coplanaires lorsque les éléments mâle et femelle sont en configuration désaccouplée.

## Patentansprüche

1. Schnellkupplung (R) zur lösbaren Verbindung von zwei von einem Druckfluid durchströmten Leitungen (C1, C2), bestehend aus einem Einsteckelement (100) und einem Aufnahmeelement (200), das in der Lage ist, das Einsteckelement durch Ineinanderstecken entlang einer Längsachse (X-X') zwischen einer entkuppelten Konfiguration und einer gekuppelten Konfiguration der Kupplung aufzunehmen,
das Einsteckelement (100) umfasst:
- einen zylindrischen Einsteckkörper (102), der einen Längshohlraum (104) und eine distale Mündung (106) mit einem Durchmesser (D106), der kleiner als der (D104) des Hohlraums ist, begrenzt,
- ein Ventil (108), das axial im Inneren des Hohlraums zwischen einer vorgerückten Stellung, in der es die Öffnung verschließt, und einer zurückgezogenen Stellung, in der es die Öffnung nicht verschließt, beweglich ist, und
- eine erste Dichtung (110), die von dem Einsteckkörper oder dem Ventil getragen wird und die jeweils an dem Ventil oder an einer inneren zylindrischen Wand (S102i) des Einsteckkörpers anliegt,
und das Aufnahmeelement (200) umfasst:
- einen zylindrischen Aufnahmekörper (202), der einen Längshohlraum (204) und eine distale Mündung (206) mit einem Durchmesser (D206), der kleiner als der oder gleich dem (D204) des Hohlraums ist, begrenzt,
- einen Stößel (208), und
- einen Schieber (212), der radial zwischen dem Aufnahmekörper und dem Stößel angeordnet ist und der axial im Inneren des Längshohlraums zwischen einer vorgerückten Stellung, in der er die Öffnung (206) verschließt, und einer zurückgezogenen Stellung, in der er die Öffnung nicht verschließt, beweglich ist, und
- eine zweite Dichtung (210), die von dem Schieber oder dem Stößel getragen wird und die jeweils an einer äußeren zylindrischen Wand (S208e) des Stößels oder an dem Schieber anliegt, wobei:
- der Einsteckkörper (102) oder der Kolben (208) einen Fluiddurchgangskanal (102.1; 208.1) definiert, der das Innere des Hohlraums mit der distalen Mündung jeweils des Einsteckelements oder des Aufnahmeelements verbindet,
- der Durchgangskanal (102.1; 208.1), der im Inneren des Hohlraums des Einsteckelements oder des Aufnahmeelements mündet, in einen Kreis (C102.1; C208.1) eingeschrieben ist, dessen Durchmesser (ø; ø') jeweils größer oder kleiner als der (D110; D210) der ersten und zweiten Dichtung (110, 210) ist,
- der Kanal (102.1; 208.1) sich zwischen zwei Ebenen senkrecht zur Längsachse jeweils zwischen einer proximalen Ebene (P1) und einer distalen Ebene (P2), die entlang der Längsachse gegeneinander versetzt sind, erstreckt,
**dadurch gekennzeichnet, dass**:
- der Kanal (102.1; 208.1) eine Nut entlang der äußeren zylindrischen Wand (S208e) des Stößels (208) oder entlang der inneren zylindrischen Wand (S102i) des Einsteckkörpers (102) ist.

2. Schnellkupplung nach Anspruch 1, **dadurch gekennzeichnet, dass** die proximale Ebene (P1) und die distale Ebene (P2) jeweils an dem Hohlraum (104; 204) und der distalen Mündung (106; 206) des Einsteck- oder Aufnahmeelements definiert sind.

3. Schnellkupplung nach Anspruch 1 oder 2, **dadurch gekennzeichnet, dass** in einer Ausgleichskonfiguration der Kupplung, die durch ein Eingreifen zwischen der gekuppelten Konfiguration und der entkuppelten Konfiguration definiert ist, eine der ersten Dichtung (110) und der zweiten Dichtung (210) zwischen der proximalen Ebene (P1) und der distalen Ebene (P2) angeordnet ist, während die andere Dichtung sich innerhalb des Hohlraums (104; 204) des entsprechenden Einsteck- oder Aufnahmeelements befindet, derart dass eine Fluidverbindung zwischen den Hohlräumen (104; 204) des Einsteck- und Aufnahmeelements gebildet wird.

4. Schnellkupplung nach Anspruch 3, **dadurch gekennzeichnet, dass** die Fluidverbindung zwischen den Hohlräumen (104; 204) des Einsteck- und Aufnahmeelements nach außen hin abgedichtet ausgeführt ist.

5. Schnellkupplung nach einem der vorhergehenden Ansprüche, **dadurch gekennzeichnet, dass** in einer Ausgleichsstellung der Kupplung, die zwischen der gekuppelten und der entkuppelten Konfiguration definiert ist, die äußere zylindrische Wand (S208e) des Stößels (208) oder die innere zylindrische Wand (S102i) des Einsteckkörpers (102) jeweils die erste Dichtung (110) oder die zweite Dichtung (210) in radialer Richtung teilweise zurückhält.

6. Schnellkupplung nach einem der vorhergehenden Ansprüche, **dadurch gekennzeichnet, dass** sich der Kanal (102.1; 208.1) zumindest teilweise entlang eines kegelstumpfförmigen Teils des Einsteckkörpers oder des Stößels erstreckt.

7. Schnellkupplung nach einem der vorhergehenden Ansprüche, **dadurch gekennzeichnet, dass** entlang der äußeren zylindrischen Wand (S208e) des Stößels (208) oder der inneren zylindrischen Wand (S102i) des Einsteckkörpers (102) mehrere Nuten (102.1; 208.1) ausgebildet sind, die gleichmäßig über den Umfang der Wand verteilt sind.

8. Schnellkupplung nach dem vorhergehenden Anspruch, **dadurch gekennzeichnet, dass** die beiden distalen und proximalen Ebenen um einen Abstand zueinander versetzt sind, der mindestens einer Dicke des Torus der ersten (110) oder zweiten (210) Dichtung entspricht.

9. Schnellkupplung nach dem vorhergehenden Anspruch, **dadurch gekennzeichnet, dass** die beiden proximalen (P1) und distalen (P2) Ebenen um einen Abstand (d) zueinander versetzt sind, der einer, zwei, drei oder vier Dicken des Torus entspricht.

10. Schnellkupplung nach einem der vorhergehenden Ansprüche, **dadurch gekennzeichnet, dass** der Stößel (208) hohl ist und an der Rückseite des Kanals (208.1) eine radiale Öffnung (226) aufweist.

11. Schnellkupplung nach einem der vorhergehenden Ansprüche, **dadurch gekennzeichnet, dass** der Stößel (208) vorn einen Stößelkopf (216), der geeignet ist, in der entkuppelten Stellung der Kupplung einen dichtenden Kontakt mit dem Ventil (108) aufrechtzuerhalten, und hinten einen rohrförmigen Teil (218) aufweist, dessen Durchmesser kleiner ist als der des Kopfes (216).

12. Schnellkupplung nach einem der vorhergehenden Ansprüche, **dadurch gekennzeichnet, dass**, wenn das Einsteck- und Aufnahmeelement in der entkuppelten Stellung sind, die erste Dichtung (110) oder die zweite Dichtung (210) jeweils in Kontakt mit der inneren zylindrischen Wand (S102i) des Einsteckkörpers (102) oder der äußeren zylindrischen Wand (S208e) des Stößels (208) vor der distalen Ebene (P2) ist.

13. Schnellkupplung nach einem der vorhergehenden Ansprüche, **dadurch gekennzeichnet, dass** die vorderen Flächen des Einsteckkörpers (102) und des Ventils (108) sowie die vorderen Flächen des Stößels (208) und des Schiebers (212) koplanar sind, wenn das Einsteck- und das Aufnahmeelement in der entkuppelten Stellung sind.

## Claims

1. A quick coupling (R) for the detachable connection of two pipes (C1, C2) through which a pressurized fluid flows, made up of a male element (100) and a female element (200) able to receive the male element by fitting along a longitudinal axis (X-X') between an uncoupled configuration and a coupled configuration of the coupling,
the male element (100) comprising:
- a cylindrical male body (102), defining a longitudinal cavity (104) and a distal mouth (106), the diameter (D106) of which is smaller than that (D104) of the cavity,
- a valve (108) movable axially inside the cavity, between a forward position in which the valve closes off the mouth and a withdrawn position in which the valve does not close off the mouth, and
- a first sealing gasket (110) that is borne by the male body or the valve, and which bears respectively on the valve or on an inner cylindrical wall (S102i) of the male body,
and the female coupling element (200) comprising:
- a cylindrical female body (202), defining a longitudinal cavity (204) and a distal mouth (206), the diameter (D206) of which is smaller than or equal to that (D204) of the cavity,
- a push-piece (208), and
- a slide valve (212), which is arranged radially between the female body and the push-piece and which is movable axially inside the longitudinal cavity between a forward position, in which the slide valve closes off the mouth (206), and a withdrawn position, in which the slide valve does not close off the mouth, and
- a second sealing gasket (210) that is borne by the slide valve or the push-piece, and which bears respectively on an outer cylindrical wall (S208e) of the push-piece or on the slide valve,
wherein:
- the male body (102) or the push-piece (208) delimits a fluid passage channel (102.1; 208.1) connecting the inside of the cavity to the distal mouth, respectively of the male element or the female element,
- the passage channel (102.1; 208.1), emerging inside the cavity of the male element or the female element, fits inside a circle (C102.1 ; C208.1), the diameter (ø; ø') of which is respectively larger or smaller than that (D110; D210) of the first and second sealing gaskets (110, 210),
- the channel (102.1; 208.1) extends between two planes that are perpendicular to the longitudinal axis, respectively between a proximal plane (P1) and distal plane (P2), which are offset relative to one another along the longitudinal axis,
**characterized in that**:
- the channel (102.1; 208.1) is a slot along the outer cylindrical wall (S208e) of the push-piece (208) or along the inner cylindrical wall (S102i) of the male body (102).

2. The quick coupling according to claim 1, **characterized in that** the proximal plane (P1) and the distal plane (P2) are respectively defined at the cavity (104; 204) and the distal mouth (106; 206) of the male or female element.

3. The quick coupling according to claim 1 or 2, **characterized in that** in a balancing configuration of the coupling, defined by fitting between the coupled configuration and the uncoupled configuration, one of the gaskets from among the first sealing gasket (110) and the second sealing gasket (210) is arranged between the proximal plane (P1) and the distal plane (P2), while the other gasket is inside the cavity (104; 204) of the corresponding male or female element, such that a fluid connection is formed between the cavities (104; 204) of the male and female elements.

4. The quick coupling according to claim 3, **characterized in that** the fluid connection between the cavities (104; 204) of the male and female elements is done sealably relative to the outside.

5. The quick coupling according to one of the preceding claims, **characterized in that** in a balancing position of the coupling, defined between the coupled and uncoupled configurations, the outer cylindrical wall (S208e) of the push-piece (208) or the inner cylindrical wall (S102i) of the male body (102)respectively partially retains the first sealing gasket (110) or the second sealing gasket (210) in the radial direction.

6. The quick coupling according to one of the preceding claims, **characterized in that** the channel (102.1; 208.1) extends at least partially along a frustoconical part of the male body or the push-piece.

7. The quick coupling according to one of the preceding claims, **characterized in that** several slots (102.1; 208.1) are formed along the outer cylindrical wall (S208e) of the push-piece (208) or the inner cylindrical wall (S102i) of the male body (102) and are regularly distributed over the circumference of the wall.

8. The quick coupling according to one of the preceding claims, **characterized in that** the two distal and proximal planes are offset from one another by a distance corresponding to at least a toroid thickness of the first (110) or second (210) sealing gasket.

9. The quick coupler according to the preceding claims, **characterized in that** the two proximal (P1) and distal (P2) planes are offset from one another by a distance (d) corresponding to one, two, three or four toroid thicknesses.

10. The quick coupling according to one of the preceding claims, **characterized in that** the push-piece (208) is hollow and comprises a radial opening (226) behind the channel (208.1).

11. The quick coupling according to one of the preceding claims, **characterized in that** the push-piece (208) comprises, in front, a push-piece head (216) able to maintain sealed contact with the valve (108) in the uncoupled position of the coupling and, behind, a tubular part (218) whereof the diameter is smaller than that of the head (216).

12. The quick coupling according to one of the preceding claims, **characterized in that** when the male and female elements are in the uncoupled configuration, the first sealing gasket (110) or the second sealing gasket (210) is respectively in contact with the inner cylindrical wall (S102i) of the male body (102) or the outer cylindrical wall (S208e) of the push-piece (208), in front of the distal plane (P2).

13. The quick coupling according to one of the preceding claims, **characterized in that** the front faces of the male body (102) and the valve (108), as well as the front faces of the push-piece (208) and the slide valve (212), are coplanar when the male and female elements are in the uncoupled configuration.
